# EUROPEAN PATENT SPECIFICATION

(11) **EP 3 876 317 B1**
(45) Date of publication and mention of the grant of the patent: **18.09.2024**
(21) Application number: 19906148.2
(22) Date of filing: 25.09.2019
(51) Int. Cl.: C01B 32/05, H01M 4/587, H01M 4/583, H01M 10/0525, H01M 4/133

(54) **NEGATIVE ELECTRODE MATERIAL FOR LITHIUM ION BATTERY, NEGATIVE ELECTRODE FOR LITHIUM ION BATTERY, LITHIUM ION BATTERY, BATTERY PACK AND BATTERY POWERED VEHICLE**
NEGATIVELEKTRODENMATERIAL FÜR LITHIUM-IONEN-BATTERIE, NEGATIVELEKTRODE FÜR LITHIUM-IONEN-BATTERIE, LITHIUM-IONEN-BATTERIE, BATTERIEPACK UND BATTERIEBETRIEBENES FAHRZEUG
MATÉRIAU D'ÉLECTRODE NÉGATIVE POUR BATTERIE AU LITHIUM-ION, ÉLECTRODE NÉGATIVE POUR BATTERIE AU LITHIUM-ION, BATTERIE AU LITHIUM-ION, BLOC-BATTERIE ET VÉHICULE ALIMENTÉ PAR BATTERIE

(30) Priority: 29.12.2018 CN 201811643308
(43) Date of publication of application: 08.09.2021
(73) Proprietor: Hunan Jinye High-Tech Co., Ltd., Hunan 410000 (CN)
(72) Inventor: SHAO, Jianrong, Changsha, Hunan 410000 (CN); SUN, Qiang, Changsha, Hunan 410000 (CN); QIN, Yuejun, Changsha, Hunan 410000 (CN)
(74) Representative: SSM Sandmair
(86) International application number: PCT/CN2019/107753
(87) International publication number: WO 2020/134242

(56) References cited:
- EP-A1- 3 865 457
- CN-A- 101 728 449
- CN-A- 101 924 209
- CN-A- 104 039 697
- CN-A- 105 408 248
- CN-A- 107 814 383
- CN-A- 109 888 284
- JP-A- 2004 138 508
- JP-A- 2011 258 348
- LESIAK B. ET AL: "C sp2/sp3 hybridisations in carbon nanomaterials - XPS and (X)AES study", APPLIED SURFACE SCIENCE, vol. 452, 5 May 2018 (2018-05-05), AMSTERDAM, NL, pages 223 - 231, XP055874120, ISSN: 0169-4332, DOI: 10.1016/j.apsusc.2018.04.269
- SILIN HUANG ET AL: "Carbonization and graphitization of pitch applied for anode materials of high power lithium ion batteries", JOURNAL OF SOLID STATE ELECTROCHEMISTRY, vol. 17, no. 5, 29 January 2013 (2013-01-29), DE, pages 1401 - 1408, XP055229230, ISSN: 1432-8488, DOI: 10.1007/s10008-013-2003-9

## Description

### FIELD

The present disclosure relates to an anode active material for a lithium-ion battery, and particularly relates to a lithium-ion battery anode material, a lithium-ion battery anode, a lithium-ion battery, a battery pack, and a battery powered vehicle.

### BACKGROUND

Lithium-ion battery has been the hot topic of recent research on new energy sources due to its advantages such as higher theoretical specific capacity, longer cycle life and high safety. During charging and discharging process of a lithium-ion battery, Li⁺ embeds and de-embeds back and forth between the cathode and the anode. Therefore, the choice of the anode material plays a crucial role for the capacity of lithium-ion battery. At present, the lithium-ion anode materials are mainly selected from the carbon materials, silicon materials and metal or alloy materials, wherein the carbon materials have readily available raw materials, possess high theoretical capacity, and provide sufficient lithium storage space, thus the currently commercialized lithium-ion batteries prefer carbon materials as the anode for lithium-ion batteries.

The carbon material of the lithium-ion battery anode is generally selected from natural graphite and artificial graphite. The natural graphite has a larger specific surface area, a lower delithiation potential, a larger first irreversible capacity, but it is prone to generate side reactions. The artificial graphite generally uses petroleum coke, needle coke as the raw material, has a higher raw material cost, and requires subsequent processes such as coating and modification treatment, its technological process is complicated.

At present, the improvement direction of the lithium-ion battery anode materials mainly focus on increasing sphericity degree and regularity degree of graphite particles, and increasing the coulombic efficiency. Although the carbon materials prepared with the aforementioned methods have an increased capacity during the initial charging and discharging process of the lithium ion batteries, their discharge capacities will be decreased correspondingly after increasing the rate performance.

LESIAK B. ET AL: "C sp2/sp3 hybridisations in carbon nanomaterials_XPS and (X)AES study", APPLIED SURFACE SCIENCE, vol. 452, 5 May 2018, pages 223-231 is concerned with estimating the reliability of C sp²/sp³ hybridizations derived from parameters D determined for a set of carbonium materials and study the chemical and morphological effects on the measured parameter D values.

CN 10781438 A discloses a modified microcrystal graphite cathode material of a lithium ion battery as well as a preparation method and application thereof.

EP 3 865 457 A1 discloses a lithium-ion battery negative electrode active material.

SILIN HUANG ET AL: "Carbonization and graphitization of pitch applied for anode materials of high power lithium ion batteries", JOURNAL OF SOLID STATE ELECTROCHEMISTRY, vol. 17, no. 5, 29 January 2013, pages 1401-1408 discloses preparation of artificial graphite materials by carbonizing coal tar pitch using one- and two-step processes, and all sintered samples were graphitized at 2800°C.

### SUMMARY

The invention is defined by claims 1 and 8. The dependent claims relate to preferred embodiments of the invention. The present disclosure aims to overcome the problems with respect to the undesirable battery capacity and rate performance in the prior art, and provide a lithium-ion battery anode material, a lithium-ion battery anode, a lithium-ion battery, a battery pack, and a battery powered vehicle, the use of this battery anode material as the lithium-ion battery anode material can effectively improve the capacity and rate performance of the lithium-ion battery.

In order to achieve the above object, a first aspect of the present disclosure provides a lithium-ion battery anode material, wherein the anode material has a half-value width within a range of 0.55-7eV at a peak of 284-290eV measured by X-ray Photoelectron Spectroscopy (XPS), and a C/O atomic ratio of (65-75): 1, and a peak area ratio of sp²C to sp³C being 1: (0.5-5) based on the sum of the spectral peak areas of sp²C and sp³C.

In a second aspect, the present disclosure provides a method of preparing a lithium-ion battery anode material, wherein the method comprises: subjecting a carbon source to the crushing, purification, carbonization and graphitization process sequentially to produce the anode material.

In a third aspect, the present disclosure provides a lithium-ion battery anode comprising the lithium-ion battery anode material of the present disclosure.

In a fourth aspect, the present disclosure provides a lithium-ion battery comprising the lithium-ion battery anode of the present disclosure, a cathode and an electrolyte, wherein the cathode and the anode are separated by a separator; the cathode, the anode and the separator are immersed in the electrolyte.

In a fifth aspect, the present disclosure provides a battery pack comprising one or more lithium-ion batteries of the present disclosure connected in series and/or in parallel.

In a sixth aspect, the present disclosure provides a battery powered vehicle comprising the battery pack of the present disclosure.

Due to the aforementioned technical solution, the battery anode material produced in the present disclosure has both sp²C and sp³C structures, and a peak area ratio of sp²C to sp³C measured by XPS being 1: (0.5-5), and a C/O atomic ratio of (65-75): 1. The use of an anode material having the above structure as an anode of a lithium-ion battery can provide a large lithium storage space, and form a stable SEI film, enhance stability of the battery anode during the cyclic process, and improve the rate performance of the lithium-ion battery.

### BRIEF DESCRITION OF THE DRAWINGS

FIG. 1 illustrates a C1s spectrogram, measured by the X-ray Photoelectron Spectroscopy (XPS), of an anode material in Example 1;
FIG. 2 illustrates a thermal weight loss curve in thermogravimetric analysis (TGA) of the anode material in Example 1.

### DETAILED DESCRPITION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed have been specifically disclosed herein.

In a first aspect, the present disclosure provides a lithium-ion battery anode material, wherein the anode material has a half-value width within a range of 0.55-7eV at a peak of 284-290eV measured by X-ray Photoelectron Spectroscopy (XPS), and a C/O atomic ratio of (65-75): 1, and a peak area ratio of sp²C to sp³C being 1: (0.5-5) based on the sum of the spectral peak areas of sp²C and sp³C.

The carbon-carbon bonds of the anode material of the present disclosure mainly exist in the forms of sp² and sp³, the anode material has both the structure of a regular graphite-like layer and defect sites formed by C-O bonds and C=O bonds. When the spectral peak area ratio of sp²C to sp³C being 1: (0.5-5), and the C/O atomic ratio is (65-75):1, the produced anode material has a large lithium storage space, so as to facilitate the repeated intercalation/deintercalation of the lithium ions, and reduce the volume change of the anode material resulting from the intercalation/deintercalation of the lithium ions, thus the use of the anode material in a lithium-ion battery may improve the cycling stability and rate performance of the lithium-ion battery.

The sp²C peak and the sp³C peak measured by XPS test in the present disclosure are mainly located at about 285eV, and the C-O peak is primarily located at about 286 eV

For the sake of further improving the lithium storage effect of the anode material, reducing the volume change of the anode material due to intercalation/deintercalation of the lithium ions, thereby improving rate performance of the lithium-ion battery, it is preferable that the anode material has a C/O atomic ratio of (65-70):1, and a peak area ratio of sp²C to sp³C is 1: (0.5-2), more preferably 1: (0.7-1) based on the sum of the spectral peak areas of sp²C and sp³C.

In order to improve the cycling stability of the lithium-ion battery, it is preferable that the anode material has a fixed carbon content/surface carbon content ratio within a range of 0.9-1.2, further preferably 1.0-1.1, the fixed carbon content is the total carbon content measured by thermogravimetric analysis, and the surface carbon content is surface carbon content measured by XPS.

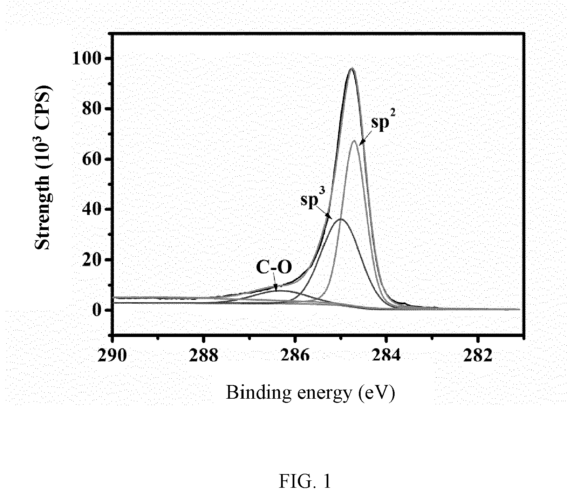

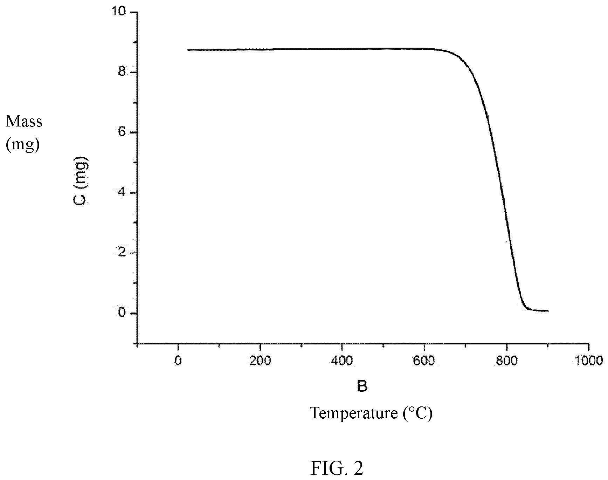

As shown in FIG. 1 and FIG. 2, the fixed carbon content is the total carbon amount measured by thermogravimetric analysis of the anode material after removing ash content, the surface carbon content is the carbon atom content of the anode material measured by XPS. In the case that the fixed carbon content and the surface carbon content satisfy the above relationship, sp²C and sp³C of the produced anode material are combined with each other, and used the produced anode material in a lithium-ion battery, the cycling stability and rate performance of the lithium-ion battery can be improved in a more effective manner.

In the present disclosure, in order to further improve the cycling stability of the lithium-ion battery, and reduce the used amount of the binder, it is preferable that the specific surface area of the anode material is within a range of 0.6-1.3m²/g, further preferably 0.6-1.1m²/g.

For the sake of further improving stability of the battery anode, it is preferable that the anode material has an interlayer spacing d(002) measured by X-ray diffraction of 0.336nm or less, and a graphitization degree of 85-93%.

The battery anode provided with the above characteristics has a more stable structure and better conductivity, and can effectively enhance the rate performance of the lithium-ion battery.

In order to further improve immersion properties of the anode material and the electrolyte, and enhance cycling stability of the lithium-ion battery, it is preferable that the anode material has a granularity distribution D10 within a range of 1-5µm, D50 within a range of 12-18µm, and D90 within a range of 25-35µm; the anode material has a maximum particle diameter of 39µm.

Preferably, the anode material has a tap density within a range of 0.9-1.2 g/cm³.

In the case that the anode material produced in the present disclosure satisfies the above-mentioned structural features, the anode material has both a better graphitization degree and a sp³ hybrid structure, provide a sufficient lithium storage space, and has an excellent immersion property with the electrolyte; when the anode material is applied in the lithium-ion battery, it can effectively improve the cycling stability and rate performance of the lithium-ion battery.

In a second aspect, the present disclosure provides a method of preparing the lithium-ion battery anode material, wherein the method comprises: subjecting a carbon source to the crushing, purification, carbonization and graphitization process sequentially to produce the anode material;

preferably, the purification process comprises treating the crushed carbon source with HF and/or HC1.

According to the present disclosure, in order to allow the anode material produced in the present disclosure has both sp²C and sp³C structure and to facilitate the subsequent carbonization and graphitization process, it is preferable that during the purification process, the crushed carbon source is treated with an acid washing solution formed by HF and HCl, and the molar ratio of HF to HCl is 1: (1-5), more preferably 1: (2-3.5).

According to the present disclosure, the carbon source may be at least one selected from the group consisting of foundry coke, metallurgical coke, coke powder and coal, preferably coke powder which has a lower cost; in addition, when the anode material obtained after the above-mentioned steps and processes is used in the lithium-ion battery, the anode material can effectively improve the capacity and rate performance of the lithium-ion battery.

The purification process of the present disclosure relates to treating the crushed carbon source with HF and/or HCl, it is preferable to treat the carbon source with HF and HCl in combination according to the above ratio, the treatment can subject the carbon source to the modified treatment to facilitate the subsequent carbonization and graphitization to produce an anode material having both sp²C and sp³C structures.

In the present disclosure, after subjecting the carbon source to the purification treatment, the carbonization and graphitization of the carbon source is carried out sequentially in steps at different temperatures, it is conducive to form an anode material having both sp²C and sp³C structures, which can be used in the lithium-ion battery anode, thereby producing the lithium-ion battery with better cycling stability and rate performance. It is preferable that the carbonization process comprises: a temperature rise from room temperature to 1,500-1,600°C, a carbonization time of 20-90min, and a heating rate of 1-10°C /min. Further preferably, the carbonization process comprises three temperature rise stages, a first temperature rise stage is raising temperature to 500-600°C and keeping the constant temperature for 20-60min; a second temperature rise stage is raising temperature to 1,000-1,200°C and keeping the constant temperature for 20-30min; a third temperature rise stage is raising temperature to 1,500-1,600°C and keeping the constant temperature for 20-30min. In addition, a heating rate of the first temperature rise stage is preferably 5-10°C /min, a heating rate of the second temperature rise stage is preferably 5-8°C /min, a heating rate of the third temperature rise stage is preferably 1-4°C /min.

In order to increase the graphitization degree of the carbon source, such that the formed anode material has a more stable structure, it is preferable that the graphitization process comprises: a temperature rise process from room temperature to 2,800-3,000°C; further preferably, the graphitization process comprises three temperature rise stages: a first temperature rise stage is raising temperature from room temperature to 1,350-1,450°C with a heating rate of r1 satisfying the condition of 3≤r1≤6°C/min; a second temperature rise stage is raising temperature to 1,980-2,020°C with a heating rate of r2 satisfying the condition of r2<3°C/min; a third temperature rise stage is raising temperature to 2,800-3,000°C with a heating rate of r3 satisfying the condition of r3<3°C/min; and a heat preservation stage is provided between the three temperature rise stages.

The aforementioned carbon source is subjected to treatment with the above method, the final produced anode material has a suitable C/O atomic ratio, and a spectral peak area ratio of sp²C to sp³C of the anode material measured by XPS is 1: (0.5-5). Using the anode material having the structure in a lithium-ion battery can effectively enhance cycling stability and rate performance of the lithium-ion battery.

In a third aspect, the present disclosure provides lithium-ion battery anode comprising the lithium-ion battery anode material of the present disclosure.

For the sake of further improving the structural stability of the anode material, it is preferable that the battery anode of the present disclosure further comprises a binder. The binder used in the lithium-ion battery anode of the present disclosure is a binder conventionally used in the art, preferably at least one selected from the group consisting of polyvinylidene fluoride, carboxylic butadiene-styrene latex, polyvinyl alcohol, sodium carboxymethylcellulose and polytetrafluoroethylene. It is further preferred that the weight ratio of the anode material to the binder is 1: (0.01-0.04). It is another preferred that the weight ratio of the anode material to the binder is 1: (0.04-0.09).

The use of the anode material produced in the present disclosure can effectively reduce the used amount of the binder and improve stability of the anode material.

In order to further improve electric conductivity of the battery anode and the contact effect of the battery anode with the electrolyte, it is preferable that the battery comprises a conductive agent, the weight ratio of the anode material to the conductive agent is 1: (0.01-0.1).

The use of the anode material prepared in the present disclosure in a lithium-ion battery can reduce the used amount of the binder, and effectively improve cycling stability and rate performance of a lithium-ion battery.

In a fourth aspect, the present disclosure provides a lithium-ion battery comprising the lithium-ion battery anode of the present disclosure, a cathode and an electrolyte, wherein the cathode and the anode are separated by a separator; the cathode, the anode and the separator are immersed in the electrolyte.

In order to provide a lithium-ion battery with a high capacity and better cycling stability, the cathode is at least one selected from the group consisting of lithium, nickel-cobalt binary metal, lithium-nickel-cobalt-manganese composite metal, nickel-cobalt-aluminum ternary metal, lithium iron phosphate, lithium manganate and lithium cobaltate.

For the sake of facilitating rapid movement of ions in the electrolyte in the lithium-ion battery between the cathode and anode, it is preferable that a material of the separator is selected from polyethylene and/or polypropylene. The electrolyte is at least one selected from the group consisting of ethylene carbonate, propylene carbonate, diethyl carbonate, dimethyl carbonate, ethyl methyl carbonate, lithium hexafluorophosphate and phosphorus pentafluoride.

The lithium-ion battery produced in the present disclosure has high discharge specific capacity, and a capacity retention rate of 97% or more at 0.5C, a capacity retention rate of 93% or more at 1C, a capacity retention rate of 76% or more at 4C.

In a fifth aspect, the present disclosure provides a battery comprising one or more lithium-ion batteries of the present disclosure connected in series and/or in parallel.

In a sixth aspect, the present disclosure provides a battery-powered vehicle including the battery pack of the present disclosure.

The lithium-ion batteries of the present disclosure are connected in series and/or parallel, the lithium-ion batteries may be assembled to form a battery pack having higher coulombic efficiency and rate performance, the battery pack can be applied in a battery powered vehicle.

The present disclosure will be described in detail with reference to examples. In the following Examples and Comparative examples,

The BET specific surface area of the anode material was tested by N₂ adsorption and desorption by using a V-sorb 2800P specific surface area and pore size analyzer, and distribution of pore volume between 2 and 200nm was analyzed with the BJH.

The X-Ray diffraction (XRD) crystal face structure of the anode material was tested by an X-ray diffractometer, and d(002) (interlayer spacing of graphite), Lc (Axial dimensions of graphite microcrystals), graphitization degree and the different peak intensity ratios were analyzed. The type of X-ray diffractometer: Da Vinci; manufacturer: BRUCKER AXS GMBH in Germany; specification: 3kw; scan range: 10° to 90°; scan speed: 12° per minute; test condition: 40kV/40mA. Wherein d(002) was calculated according to the formula λ/(2sinθ); the graphitization degree was calculated according to the formula (0.344-d(002))/(0.344-0.3354) ×100%.

The granularity distribution of the anode material was tested by the particle size analyzer (OMEC).

The thermogravimetric curve of the anode material was tested by means of a thermogravimetric analyzer; the test conditions were as follows: the intake rate of N₂ is 10mL/min, the intake rate of Ar is 50mL/min.

The tap density of the anode material was tested with a tap density instrument, the true density was tested with the Ultrapycnometer 1000.

The XPS analysis on the surface of the anode material was carried out by an X-ray Photoelectron Spectroscopy analyzer, and the obtained carbon spectrum was subjected to a peak separation process using an XPSPEAK, each peak is corresponding to the sp²C peak, the sp³C peak and a C-O peak, and the anode material was analyzed based on the peak areas.

The term "room temperature" in the following Examples and Comparative examples refers to "25°C".

### Example 1

### 1. Preparation of lithium battery anode material:

The present example selected coke powder (purchased from the Baotailong New Materials Co., Ltd.) as a carbon source, and the carbon source was crushed to D50=10-19µm after drying to a state having a water content less than 1wt%, HF and HCl were subsequently mixed in a molar ratio of 1:3 to form an acid washing solution. The crushed carbon source and the acid washing solution were stirred and mixed in a volume ratio of 1:1.5, and then the mixture was subjected to a separation treatment, the obtained solid was subjected to dry for further use.

The dried solid was subjected to a carbonization treatment, the entire carbonization process was carried out under nitrogen gas protection, and comprised three temperature rise stages. The first temperature rise stage was: raising temperature from the room temperature to 500°C at a heating rate of 8°C/min and keeping the constant temperature 500°C for 60min; the second temperature rise stage was: raising temperature to 1,000°C at a heating rate of 5°C/min and keeping the constant temperature 1,000°C for 30min; the third temperature rise stage was: raising temperature to 1,500°C at a heating rate of 3°C/min and keeping the constant temperature 1,500°C for 30min; then subsequently cooled to 300-400°C.

The carbonized solid was subjected to the graphitization treatment, and the entire graphitization process was carried out under nitrogen gas protection, and included three temperature rise stages. The first temperature rise stage was: raising temperature to 1,400°C at a heating rate of r1=5°C/min and keeping the constant temperature 1,400°C for 60min; the second temperature rise stage was: raising temperature to 1,980°C at a heating rate of r2=2°C/min and keeping the constant temperature 1,980°C for 30min; the third temperature rise stage was: raising temperature to 3,000°C at a heating rate of r3=2°C/min and keeping the constant temperature 3,000°C for 60min; subsequently the solid was cooled and taken out from the furnace to obtain the anode material Sl. The XPS test data for Sl was shown in FIG. 1, and the thermal weight loss curve for Sl was illustrated in FIG. 2.

### 2. Preparation of the lithium-ion battery anode

S1 was used as a battery anode material, acetylene black was applied as a conductive agent, and polyvinylidene fluoride was utilized as a binder. S1, polyvinylidene fluoride and acetylene black were weighted according to a mass ratio of 92:5:3. The formulated N-methyl-2-pyrrolidone solution with a concentration of 5wt% was then added and stirred at a speed of 1,500 r/min for 30min to form a paste. The paste was uniformly coated on a copper foil, the coated copper foil was subjected to bake in a vacuum oven at 100°C for 8h, the solvent in the paste was removed so as to prepare a battery anode.

### 3. Assembly of button cell

The electrode sheet obtained in step 2 was used as the anode of a button cell, which was punched into a circular sheet ready for use. The metal lithium was also punched into a circular sheet as the cathode, the cathode and the anode were separated by a polyethylene separator, and the electrolyte was 1mol/L of a solution of ethylene carbonate/ethyl methyl carbonate of lithium hexafluorophosphate (the volume ratio of ethylene carbonate to ethyl methyl carbonate 1: 1), the battery assembly was operated in a glove box to prepare and form the button cell.

The button cell was tested with the LAND CT2001 in the voltage range of 0.001-2V vs. Li/Li⁺, and its first discharge specific capacity and first coulombic efficiency were tested.

### 4. Assembly of the columnar battery

A columnar battery is assembled and formed according to the assembly standard of 18650lithium battery, by using lithium cobaltate as cathode, utilizing the mixture of lithium hexafluorophosphate and ethylene carbonate in a volume ratio of 95:5 as electrolyte, and using the S1 as the anode material. The first discharge capacity of the columnar battery were tested at an operating voltage of 2-4.2V, and the discharge capacity at 0.5C, 1C, and 4C was measured, respectively, and the capacity retention rates of the discharge capacities at different discharge rates with respect to the first discharge capacity were tested.

### Example 2

The battery was prepared according to the same method as that in Example 1, except that:
During the process of preparing a lithium battery anode material, HF and HCl were mixed in a molar ratio of 1:3.5 to form an acid washing solution. The crushed carbon source and the acid washing solution were stirred and mixed in a volume ratio of 1:1.5, and then the mixture was subjected to a separation treatment, the obtained solid was subjected to dry for further use.

The baked solid was subjected to a carbonization treatment, the entire carbonization process was carried out under nitrogen gas protection, and comprised three temperature rise stages. The first temperature rise stage was: raising temperature from the room temperature to 600°C at a heating rate of 5°C/min and keeping the constant temperature 600°C for 60min; the second temperature rise stage was: raising temperature to 1,200°C at a heating rate of 5°C/min and keeping the constant temperature 1,200°C for 30min; the third temperature rise stage was: raising temperature to 1,600°C at a heating rate of 1°C/min and keeping the constant temperature 1,600°C for 30min; subsequently cooled to the room temperature.

The carbonized solid was subjected to the graphitization treatment, and the entire graphitization process was carried out under nitrogen gas protection, and included three temperature rise stages. The first temperature rise stage was: raising temperature to 1,400°C at a heating rate of r1=3°C/min and keeping the constant temperature 1,400°C for 60min; the second temperature rise stage was: raising temperature to 1,980°C at a heating rate of r2=2°C/min and keeping the constant temperature 1,980°C for 30min; the third temperature rise stage was: raising temperature to 3,000°C at a heating rate of r3=1°C/min and keeping the constant temperature 3,000°C for 60min; the solid was subsequently cooled to 2,000°C at the temperature fall rate of 5°C/min, and then naturally cooled to the room temperature to produce the anode material S2.

### Example 3

The battery was prepared according to the same method as that in Example 1, except that:
During the process of preparing a lithium battery anode material, HF and HCl were mixed in a molar ratio of 1:2 to form an acid washing solution. The crushed carbon source and the acid washing solution were stirred and mixed in a volume ratio of 1:1.5, and then the mixture was subjected to a separation treatment, the obtained solid was subjected to dry for further use.

The dried solid was subjected to a carbonization treatment, the entire carbonization process was carried out under nitrogen gas protection, and comprised three temperature rise stages. The first temperature rise stage was: raising temperature from the room temperature to 500°C at a heating rate of 10°C/min and keeping the constant temperature 500°C for 60min; the second temperature rise stage was: raising temperature to 1,000°C at a heating rate of 8°C/min and keeping the constant temperature 1,000°C for 60min; the third temperature rise stage was: raising temperature to 1,500°C at a heating rate of 4°C/min and keeping the constant temperature 1,500°C for 60min; subsequently cooled to the room temperature.

The carbonized solid was subjected to the graphitization treatment, and the entire graphitization process was carried out under nitrogen gas protection, and included three temperature rise stages. The first temperature rise stage was: raising temperature to 1,400°C at a heating rate of r1=6°C/min and keeping the constant temperature 1,400°C for 60min; the second temperature rise stage was: raising temperature to 1,980°C at a heating rate of r2=2°C/min and keeping the constant temperature 1,980°C for 60min; the third temperature rise stage was: raising temperature to 3,000°C at a heating rate of r3=2°C/min and keeping the constant temperature 3,000°C for 60min; the solid was subsequently cooled to 2,000°C at the temperature fall rate of 5°C/min, and then naturally cooled to the room temperature to produce the anode material S3.

### Example 4

The battery was prepared according to the same method as that in Example 1, except that:
The baked solid was subjected to a carbonization treatment, the entire carbonization process was carried out under nitrogen gas protection, the carbonization process comprised raising temperature from the room temperature to 1,500°C at a heating rate of 5°C/min and keeping the constant temperature 1,500°C for 60min, subsequently natural cooled to the room temperature.

The finally produced anode material produced was denoted as S4.

### Example 5

The battery was prepared according to the same method as that in Example 1, except that:
The carbonized solid was subjected to the graphitization treatment, and the entire graphitization process was carried out under nitrogen gas protection, and included two temperature rise stages. The first temperature rise stage was: raising temperature to 2,000°C at a heating rate of r1=5°C/min and keeping the constant temperature 2,000°C for 60min; the second temperature rise stage was: raising temperature to 3,000°C at a heating rate of r2=2°C/min and keeping the constant temperature 3,000°C for 60min; the solid was then cooled and taken out of the furnace to produce the anode material S5.

### Example 6

The battery was prepared according to the same method as that in Example 1, except that: when preparing the lithium battery anode material, HF and HCl were mixed in a molar ratio of 1:5 to form an acid washing liquid. The finally produced anode material was denoted as S6.

### Example 7

The battery was prepared according to the same method as that in Example 1, except that: coal (produced by pulverizing and mixing anthracite, bituminous coal and lignite according to the ratio of anthracite: bituminous coal: lignite =3:6:2) was selected as the carbon source, and the carbon source was crushed to D50=10-19µm after drying to a state having a water content less than 1wt%, HF and HCl were subsequently mixed in a molar ratio of 1:3 to form an acid washing solution. The crushed carbon source and the acid washing solution were stirred and mixed in a volume ratio of 1:1.5, and then the mixture was subjected to a separation treatment, the obtained solid was subjected to dry for further use.

### Example 8

The battery was prepared according to the same method as that in Example 1, except that: coal (produced by pulverizing and mixing anthracite, bituminous coal and lignite according to the ratio of anthracite: bituminous coal: lignite =3:6:2) was selected as the carbon source, and the carbon source was crushed to D50=10-19µm after drying to a state having a water content less than 1wt%, HF and HCl were subsequently mixed in a molar ratio of 1:10 to form an acid washing solution. The crushed carbon source and the acid washing solution were stirred and mixed in a volume ratio of 1:1.5, and then the mixture was subjected to a separation treatment, the obtained solid was subjected to dry for further use.

### Comparative example 1

The battery was prepared according to the same method as that in Example 1, except that: when preparing the lithium battery anode material, HF and HCl were mixed in a molar ratio of 1:10 to form an acid washing liquid. The finally produced anode material was denoted as D1.

### Test example

The performance test results of the anode materials prepared in each of the Examples and Comparative examples were shown in Table 1, and the performance test results of the lithium-ion batteries formed by assembling of the anode materials prepared in each of the Examples and Comparative examples were illustrated in Table 2.

**Table 1**

| Anode material | | | | S1 | S2 | S3 | S4 | S5 |
|---|---|---|---|---|---|---|---|---|
| XPS data | sp²C peak | Peak position/eV | | 284.7 | 284.7 | 284.7 | 284.7 | 284.7 |
| | | Half-value width/eV | | 0.6 | 0.59 | 0.59 | 0.58 | 0.6 |
| | sp³C peak | Peak position/eV | | 284.9 | 284.9 | 284.9 | 284.9 | 284.5 |
| | | Half-value width/eV | | 1 | 0.92 | 0.95 | 0.98 | 0.9 |
| | C-O peak | Peak position/eV | | 286.3 | 286.1 | 286.3 | 286.1 | 286.1 |
| | | Half-value width/eV | | 1.4 | 1.5 | 1.5 | 1.5 | 1.5 |
| | C/O atomic ratio | | | 67:1 | 68:1 | 68:1 | 68:1 | 67:1 |
| | Peak area ratio of sp²C to sp³C | | | 1:0.78 | 1:0.92 | 1:0.95 | 1:0.90 | 1:0.85 |
| Fixed carbon content/surface carbon content | | | | 1.01 | 1.01 | 1.01 | 1.01 | 1.12 |
| Specific surface area/m²/g | | | | 1.05 | 0.98 | 1.02 | 1.12 | 12 |
| d(002)/nm | | | | 0.3359 | 0.3359 | 0.3359 | 0.336 | 0.336 |
| Graphitization degree/% | | | | 87.5 | 86.7 | 86.9 | 88.5 | 89.2 |
| Granularity distribution | | | D10/µm | 4.71 | 4.8 | 5 | 3.2 | 3.8 |
| | | | D50/µm | 12.5 | 15 | 15.8 | 16.3 | 17.8 |
| | | | D90/µm | 30.6 | 25 | 32 | 28 | 34.7 |
| Tap density/g/cm³ | | | | 1.15 | 1.12 | 1.08 | 1.18 | 0.95 |

**Table 1 (continued)**

| Anode material | | | | S6 | S7 | S8 | D1 |
|---|---|---|---|---|---|---|---|
| XPS data | sp²C peak | Peak position/eV | | 284.7 | 284.7 | 284.7 | 284.7 |
| | | Half-value width/eV | | 0.61 | 0.6 | 0.61 | 0.58 |
| | sp³C peak | Peak position/eV | | 284.9 | 284.9 | 284.9 | 284.8 |
| | | Half-value width/eV | | 0.92 | 0.9 | 0.92 | 0.95 |
| | C-O peak | Peak position/eV | | 286.3 | 286.3 | 286.5 | 286.3 |
| | | Half-value width/eV | | 1.4 | 1.5 | 1.5 | 1.6 |
| | C/O atomic ratio | | | 67:1 | 67:1 | 67:1 | 58:1 |
| | Peak area ratio of sp²C to sp³C | | | 1:0.82 | 1:0.79 | 1:0.87 | 1:0.45 |
| Fixed carbon content/surface carbon content | | | | 1.2 | 1.01 | 1.28 | 1.4 |
| Specific surface area/m²/g | | | | 1.28 | 1.05 | 1.32 | 1.4 |
| d(002)/nm | | | | 0.336 | 0.336 | 0.336 | 0.336 |
| Graphitization degree/% | | | | 88.9 | 87.8 | 88.5 | 89.4 |
| Granularity distribution | | | D10/µm | 2.7 | 4.8 | 3.7 | 2.5 |
| | | | D50/µm | 18 | 14.2 | 18.4 | 17.5 |
| | | | D90/µm | 35 | 32 | 33.7 | 28 |
| Tap density/g/cm³ | | | | 1.2 | 1.15 | 1.2 | 1.78 |

The results of Table 1 demonstrate that the C/O atomic ratio of the anode material produced in the Examples of the present disclosure is within a range of (65-70):1, and the peak area ratio of the sp²C spectrum to sp³C spectrum is within a range of 1: (0.5-2), the use of the anode material in a lithium-ion battery can effectively improve the cycling property and rate performance of the battery.

**Table 2**

| Battery properties | S1 | S2 | S3 | S4 | S5 |
|---|---|---|---|---|---|
| Discharge specific capacity/mAh/g | 358 | 357 | 365 | 365 | 362 |
| First coulombic efficiency/% | 92.5 | 92.7 | 91.8 | 90 | 89.5 |
| 0.5C capacity retention ratio/% | 99.1 | 99 | 98.5 | 98.2 | 98 |
| 1C capacity retention ratio/% | 98.85 | 98.2 | 98.1 | 97.47 | 97.8 |
| 4C capacity retention ratio/% | 90.67 | 90.73 | 88.9 | 89.8 | 88.5 |

**Table 2 (continued)**

| Battery properties | S6 | S7 | S8 | D1 |
|---|---|---|---|---|
| Discharge specific capacity/mAh/g | 354 | 357 | 352 | 350 |
| First coulombic efficiency/% | 88.4 | 91.7 | 88.4 | 87.5 |
| 0.5C capacity retention ratio/% | 97.54 | 98.2 | 98.1 | 96.4 |
| 1C capacity retention ratio/% | 95.25 | 96.4 | 96.9 | 92.51 |
| 4C capacity retention ratio/% | 79.7 | 88.7 | 80.5 | 68.97 |

The results of Table 2 illustrate that the lithium-ion batteries formed by assembling the anode materials produced in the Examples of the present disclosure have a higher discharge specific capacity and a first coulombic efficiency, and still retain a better capacity at a high rate.

## Claims

1. A lithium-ion battery anode material, wherein the anode material has a half-value width within a range of 0.55-7eV at a peak of 284-290eV measured by X-ray Photoelectron Spectroscopy (XPS), and a C/O atomic ratio of (65-75): 1, and a peak area ratio of sp²C to sp³C being 1: (0.5-5) based on the sum of the spectral peak areas of sp²C and sp³C;
wherein the method of preparing the lithium-ion battery anode material comprising: subjecting a carbon source to the crushing, purification, carbonization and graphitization process sequentially to produce the anode material;
wherein the carbon source is at least one selected from the group consisting of foundry coke, metallurgical coke, coke powder and coal;
wherein the crushed carbon source is treated with an acid washing solution formed by HF and HCl, and the molar ratio of HF to HCl is 1: (1-5);
wherein the carbonization process comprises three temperature rise stages, a first temperature rise stage is raising temperature to 500-600°C and keeping the constant temperature for 20-60min; a second temperature rise stage is raising temperature to 1,000-1,200°C and keeping the constant temperature for 20-30min; a third temperature rise stage is raising temperature to 1,500-1,600°C and keeping the constant temperature for 20-30min;
wherein the graphitization process comprises three temperature rise stages: a first temperature rise stage is raising temperature from room temperature to 1,350-1,450°C with a heating rate of r1 satisfying the condition of 3≤r1≤6°C/min; a second temperature rise stage is raising temperature to 1,980-2,020°C with a heating rate of r2 satisfying the condition of r2<3°C/min; a third temperature rise stage is raising temperature to 2,800-3,000°C with a heating rate of r3 satisfying the condition of r3<3°C/min; and a heat preservation stage is provided between the three temperature rise stages.

2. The lithium-ion battery anode material of claim 1, wherein the anode material has a C/O atomic ratio of (65-70): 1, and a peak area ratio of sp²C to sp³C being 1: (0.5-2) based on the sum of the spectral peak areas of sp²C and sp³C.

3. The lithium-ion battery anode material of claim 1 or 2, wherein the anode material has a fixed carbon content/surface carbon content ratio within a range of 0.9-1.2, the fixed carbon content is the total carbon content measured by thermogravimetric analysis, and the surface carbon content is surface carbon content measured by XPS.

4. The lithium-ion battery anode material of any one of claims 1-3, wherein the specific surface area of the anode material is within a range of 0.6-1.3m²/g, preferably 0.6-1.1m²/g.

5. The lithium-ion battery anode material of any one of claims 1-4, wherein the anode material has an interlayer spacing d(002) measured by X-ray diffraction of 0.336nm or less, and a graphitization degree of 85-93%.

6. The lithium-ion battery anode material of any one of claims 1-5, wherein the anode material has a granularity distribution D10 within a range of 1-5µm, D50 within a range of 12-18µm, and D90 within a range of 25-35µm; the anode material has a maximum particle diameter of 39µm.

7. The lithium-ion battery anode material of any one of claims 1-6, wherein the anode material has a tap density within a range of 0.9-1.2 g/cm³.

8. A method of preparing the lithium-ion battery anode material of any one of claims 1-7 comprising: subjecting a carbon source to the crushing, purification, carbonization and graphitization process sequentially to produce the anode material;
wherein the method of preparing the lithium-ion battery anode material of any one of claims 1-7 comprising: subjecting a carbon source to the crushing, purification, carbonization and graphitization process sequentially to produce the anode material;
wherein the carbon source is at least one selected from the group consisting of foundry coke, metallurgical coke, coke powder and coal;
wherein the crushed carbon source is treated with an acid washing solution formed by HF and HCl, and the molar ratio of HF to HCl is 1: (1-5);
wherein the carbonization process comprises three temperature rise stages, a first temperature rise stage is raising temperature to 500-600°C and keeping the constant temperature for 20-60min; a second temperature rise stage is raising temperature to 1,000-1,200°C and keeping the constant temperature for 20-30min; a third temperature rise stage is raising temperature to 1,500-1,600°C and keeping the constant temperature for 20-30min;
wherein the graphitization process comprises three temperature rise stages: a first temperature rise stage is raising temperature from room temperature to 1,350-1,450°C with a heating rate of r1 satisfying the condition of 3≤r1≤6°C/min; a second temperature rise stage is raising temperature to 1,980-2,020°C with a heating rate of r2 satisfying the condition of r2<3°C/min; a third temperature rise stage is raising temperature to 2,800-3,000°C with a heating rate of r3 satisfying the condition of r3<3°C/min; and a heat preservation stage is provided between the three temperature rise stages.

9. The method of claim 8, wherein during the purification process, the crushed carbon source is treated with HF and HCl, and the molar ratio of HF to HCl is 1: (2-3.5).

10. A lithium-ion battery anode comprising the lithium-ion battery anode material of any one of claims 1-7;
preferably, the anode further comprises a binder, the weight ratio of the anode material to the binder is 1: (0.04-0.09);
preferably, the anode further comprises a conductive agent, the weight ratio of the anode material to the conductive agent is 1: (0.01-0.1).

11. A lithium-ion battery comprising the lithium-ion battery anode of claim 10, a cathode and an electrolyte, wherein the cathode and the anode are separated by a separator; the cathode, the anode and the separator are immersed in the electrolyte.

12. A battery pack comprising one or more lithium-ion batteries of claim 11 connected in series and/or in parallel.

13. A battery powered vehicle comprising the battery pack of claim 12.

## Patentansprüche

1. Anodenmaterial für Lithium-Ionen-Akkus, wobei das Anodenmaterial eine Halbwertsbreite, die bei einem durch Röntgenphotoelektronenspektroskopie (XPS) gemessenen Peak von 284 bis 290 eV im Bereich von 0,55⁻⁷ eV liegt, und ein C/O-Atomverhältnis von (65 bis 75) : 1 und ein Peakflächenverhältnis von sp²C zu sp³C von 1 : (0,5 bis 5) basierend auf der Summe der spektralen Peakflächen von sp²C und sp³C aufweist,
wobei das Verfahren zur Herstellung des Anodenmaterials für Lithium-Ionen-Akkus einen Schritt umfasst, bei dem eine Kohlenstoffquelle nacheinander einem Zerkleinerungsvorgang, einem Reinigungsvorgang, einem Karbonisierungsvorgang und einem Graphitierungsvorgang unterzogen wird, um das Anodenmaterial herzustellen,
wobei die Kohlenstoffquelle mindestens eines aus Gießereikoks, metallurgischem Koks, Kokspulver und Kohle ist,
wobei die zerkleinerte Kohlenstoffquelle mit einer sauren Waschlösung aus HF und HCl behandelt wird und das Molverhältnis von HF zu HCl 1 : (1 bis 5) beträgt,
wobei der Karbonisierungsvorgang drei Temperaturanstiegsstufen umfasst, nämlich eine erste Temperaturanstiegsstufe, in der die Temperatur auf 500 bis 600°C erhöht und 20 bis 60 Minuten lang konstant gehalten wird, eine zweite Temperaturanstiegsstufe, in der die Temperatur auf 1.000 bis 1.200 °C erhöht und 20 bis 30 Minuten lang konstant gehalten wird, und eine dritte Temperaturanstiegsstufe, in der die Temperatur auf 1.500 bis 1.600 °C erhöht und 20 bis 30 Minuten lang konstant gehalten wird,
wobei der Graphitierungsvorgang drei Temperaturanstiegsstufen umfasst, nämlich eine erste Temperaturanstiegsstufe, in der die Temperatur von Raumtemperatur auf 1.350 bis 1.450 °C mit einer Heizrate r1 erhöht wird, die der Bedingung 3 ≤ r1 ≤ 6 °C/min genügt, eine zweite Temperaturanstiegsstufe, in der die Temperatur auf 1.980 bis 2.020 °C mit einer Heizrate r2 erhöht wird, die der Bedingung r2 < 3 °C/min genügt, und eine dritte Temperaturanstiegsstufe, in der die Temperatur auf 2.800 bis 3.000 °C mit einer Heizrate r3 erhöht wird, die der Bedingung r3 < 3 °C/min genügt, und wobei zwischen den drei Temperaturanstiegsstufen eine Wärmeerhaltungsstufe vorgesehen ist.

2. Anodenmaterial für Lithium-Ionen-Akkus nach Anspruch 1, wobei das Anodenmaterial ein C/O-Atomverhältnis von (65 bis 70) : 1 und ein Peakflächenverhältnis von sp²C zu sp³C von 1 : (0,5 bis 2) basierend auf der Summe der spektralen Peakflächen von sp²C und sp³C aufweist.

3. Anodenmaterial für Lithium-Ionen-Akkus nach Anspruch 1 oder 2, wobei das Anodenmaterial ein Verhältnis des fixierten Kohlenstoffgehalts zum Oberflächenkohlenstoffgehalt aufweist, das im Bereich von 0,9 bis 1,2 liegt, wobei der fixierte Kohlenstoffgehalt der durch thermogravimetrische Analyse gemessene Gesamtkohlenstoffgehalt ist und der Oberflächenkohlenstoffgehalt der durch XPS gemessene Oberflächenkohlenstoffgehalt ist.

4. Anodenmaterial für Lithium-Ionen-Akkus nach einem der Ansprüche 1 bis 3, wobei die spezifische Oberfläche des Anodenmaterials im Bereich von 0,6 bis 1,3 m²/g, vorzugsweise von 0,6 bis 1,1 m²/g liegt.

5. Anodenmaterial für Lithium-Ionen-Akkus nach einem der Ansprüche 1 bis 4, wobei das Anodenmaterial einen durch Röntgenbeugung gemessenen Zwischenschichtabstand d(002) von 0,336 nm oder weniger und einen Graphitierungsgrad von 85 bis 93 % aufweist.

6. Anodenmaterial für Lithium-Ionen-Akkus nach einem der Ansprüche 1 bis 5, wobei das Anodenmaterial eine Körnigkeitsverteilung D10, die im Bereich von 1 bis 5 µm liegt, eine Körnigkeitsverteilung D50, die im Bereich von 12 bis 18 µm liegt, und eine Körnigkeitsverteilung D90, die im Bereich von 25 bis 35 µm liegt, sowie einen maximalen Partikeldurchmesser von 39 µm aufweist.

7. Anodenmaterial für Lithium-Ionen-Akkus nach einem der Ansprüche 1 bis 6, wobei das Anodenmaterial eine Klopfdichte aufweist, die im Bereich von 0,9 bis 1,2 g/cm³ liegt.

8. Verfahren zur Herstellung des Anodenmaterials für Lithium-Ionen-Akkus nach einem der Ansprüche 1 bis 7, das einen Schritt umfasst, bei dem eine Kohlenstoffquelle nacheinander einem Zerkleinerungsvorgang, einem Reinigungsvorgang, einem Karbonisierungsvorgang und einem Graphitierungsvorgang unterzogen wird, um das Anodenmaterial herzustellen,
wobei die Kohlenstoffquelle mindestens eines aus Gießereikoks, metallurgischem Koks, Kokspulver und Kohle ist,
wobei die zerkleinerte Kohlenstoffquelle mit einer sauren Waschlösung aus HF und HCl behandelt wird und das Molverhältnis von HF zu HCl 1 : (1 bis 5) beträgt,
wobei der Karbonisierungsvorgang drei Temperaturanstiegsstufen umfasst, nämlich eine erste Temperaturanstiegsstufe, in der die Temperatur auf 500 bis 600 °C erhöht und 20 bis 60 Minuten lang konstant gehalten wird, eine zweite Temperaturanstiegsstufe, in der die Temperatur auf 1.000 bis 1.200 °C erhöht und 20 bis 30 Minuten lang konstant gehalten wird, und eine dritte Temperaturanstiegsstufe, in der die Temperatur auf 1.500 bis 1.600 °C erhöht und 20 bis 30 Minuten lang konstant gehalten wird,
wobei der Graphitierungsvorgang drei Temperaturanstiegsstufen umfasst, nämlich eine erste Temperaturanstiegsstufe, in der die Temperatur von Raumtemperatur auf 1.350 bis 1.450 °C mit einer Heizrate r1 erhöht wird, die der Bedingung 3 ≤ r1 ≤ 6 °C/min genügt, eine zweite Temperaturanstiegsstufe, in der die Temperatur auf 1.980 bis 2.020 °C mit einer Heizrate r2 erhöht wird, die der Bedingung r2 < 3 °C/min genügt, und eine dritte Temperaturanstiegsstufe, in der die Temperatur auf 2.800 bis 3.000 °C mit einer Heizrate r3 erhöht wird, die der Bedingung r3 < 3 °C/min genügt, und wobei zwischen den drei Temperaturanstiegsstufen eine Wärmeerhaltungsstufe vorgesehen ist.

9. Verfahren nach Anspruch 8, wobei beim Reinigungsvorgang die zerkleinerte Kohlenstoffquelle mit HF und HCl behandelt wird und das Molverhältnis von HF zu HCl 1 : (2 bis 3,5) beträgt.

10. Anode für Lithium-lonen-Akkus, die das Anodenmaterial für Lithium-Ionen-Akkus nach einem der Ansprüche 1 bis 7 umfasst, wobei die Anode vorzugsweise ferner ein Bindemittel umfasst und das Gewichtsverhältnis des Anodenmaterials zum Bindemittel 1 : (0,04 bis 0,09) beträgt, wobei die Anode vorzugsweise ferner ein leitendes Mittel umfasst und das Gewichtsverhältnis des Anodenmaterials zum leitenden Mittel 1 : (0,01 bis 0,1) beträgt.

11. Lithium-Ionen-Akku, der die Anode für Lithium-Ionen-Akkus nach Anspruch 10, eine Kathode und einen Elektrolyten umfasst, wobei die Kathode und die Anode durch einen Separator getrennt sind und die Kathode, die Anode und der Separator in den Elektrolyten eingetaucht sind.

12. Akkusatz, der einen oder mehrere in Reihe und/oder parallel geschaltete Lithium-Ionen-Akkus nach Anspruch 11 umfasst.

13. Akkubetriebenes Fahrzeug, das den Akkusatz nach Anspruch 12 umfasst.

## Revendications

1. Matériau d'anode de batterie lithium-ion, le matériau d'anode présentant une largeur à mi-hauteur à portée de 0,55⁻⁷ eV à un pic de 284 à 290 eV mesuré par spectroscopie photoélectronique par rayons X (XPS) et un rapport atomique C/O de (65 à 75) : 1 et un rapport d'aire de pic de sp²C à sp³C de 1 : (0,5 à 5) sur la base de la somme des aires de pic spectral de sp²C et sp³C,
le procédé de préparation du matériau d'anode de batterie lithium-ion comprenant la soumise d'une source de carbone à des processus de concassage, de purification, de carbonisation et de graphitisation de manière séquentielle, pour produire le matériau d'anode,
la source de carbone étant au moins l'un parmi le coke de fonderie, le coke métallurgique, la poudre de coke et le charbon,
la source de carbone concassée étant traitée avec une solution de lavage acide formée par HF et HCl, le rapport molaire de HF à HCl étant de 1 : (1 à 5),
le processus de carbonisation comprenant trois étapes d'augmentation de température, à savoir une première étape d'augmentation de température élevant la température à 500 à 600 °C et maintenant la température constante pendant 20 à 60 minutes, une deuxième étape d'augmentation de température élevant la température à 1 000 à 1 200 °C et maintenant la température constante pendant 20 à 30 minutes, et une troisième étape d'augmentation de température élevant la température à 1 500 à 1 600 °C et maintenant la température constante pendant 20 à 30 minutes,
le processus de graphitisation comprenant trois étapes d'augmentation de température, à savoir une première étape d'augmentation de température élevant la température de la température ambiante à 1 350 à 1 450 °C à une vitesse de chauffage r1 satisfaisant la condition 3 ≤ r1 ≤ 6 °C/min, une deuxième étape d'augmentation de température élevant la température à 1 980 à 2 020 °C à une vitesse de chauffage r2 satisfaisant la condition r2 < 3 °C /min, et une troisième étape d'augmentation de température élevant la température à 2 800 à 3 000 °C à une vitesse de chauffage r3 satisfaisant la condition r3 < 3 °C/min, une étape de conservation de chaleur étant prévue entre les trois étapes d'augmentation de température.

2. Matériau d'anode de batterie lithium-ion selon la revendication 1, le matériau d'anode présentant un rapport atomique C/O de (65 à 70) : 1 et un rapport d'aire de pic de sp²C à sp³C de 1 : (0,5 à 2) sur la base de la somme des aires de pic spectral de sp²C et sp³C.

3. Matériau d'anode de batterie lithium-ion selon la revendication 1 ou 2, le matériau d'anode présentant un rapport de la teneur en carbone fixe à la teneur en carbone de surface s'étendant de 0,9 à 1,2, la teneur en carbone fixe étant la teneur en carbone totale mesurée par analyse thermogravimétrique et la teneur en carbone de surface étant la teneur en carbone de surface mesurée par XPS.

4. Matériau d'anode de batterie lithium-ion selon l'une quelconque des revendications 1 à 3, la surface spécifique du matériau d'anode s'étendant de 0,6 à 1,3 m²/g, de préférence de 0,6 à 1,1 m²/g.

5. Matériau d'anode de batterie lithium-ion selon l'une quelconque des revendications 1 à 4, le matériau d'anode présentant un espacement intercouche d(002) mesuré par diffraction des rayons X de 0,336 nm ou moins et un degré de graphitisation de 85 à 93 %.

6. Matériau d'anode de batterie lithium-ion selon l'une quelconque des revendications 1 à 5, le matériau d'anode présentant une distribution de granularité D10 s'étendant de 1 à 5 µm, une distribution de granularité D50 s'étendant de 12 à 18 µm et une distribution de granularité D90 s'étendant de 25 à 35 µm, ainsi qu'un diamètre de particule maximal de 39 µm.

7. Matériau d'anode de batterie lithium-ion selon l'une quelconque des revendications 1 à 6, le matériau d'anode présentant une densité après tassement s'étendant de 0,9 à 1,2 g/cm³.

8. Procédé de préparation du matériau d'anode de batterie lithium-ion selon l'une quelconque des revendications 1 à 7, comprenant la soumise d'une source de carbone à des processus de concassage, de purification, de carbonisation et de graphitisation de manière séquentielle, pour produire le matériau d'anode,
la source de carbone étant au moins l'un parmi le coke de fonderie, le coke métallurgique, la poudre de coke et le charbon,
la source de carbone concassée étant traitée avec une solution de lavage acide formée par HF et HCl, le rapport molaire de HF à HCl étant de 1 : (1 à 5),
le processus de carbonisation comprenant trois étapes d'augmentation de température, à savoir une première étape d'augmentation de température élevant la température à 500 à 600 °C et maintenant la température constante pendant 20 à 60 minutes, une deuxième étape d'augmentation de température élevant la température à 1 000 à 1 200 °C et maintenant la température constante pendant 20 à 30 minutes, et une troisième étape d'augmentation de température élevant la température à 1 500 à 1 600 °C et maintenant la température constante pendant 20 à 30 minutes,
le processus de graphitisation comprenant trois étapes d'augmentation de température, à savoir une première étape d'augmentation de température élevant la température de la température ambiante à 1 350 à 1 450 °C à une vitesse de chauffage r1 satisfaisant la condition 3 ≤ r1 ≤ 6 °C/min, une deuxième étape d'augmentation de température élevant la température à 1 980 à 2 020 °C à une vitesse de chauffage r2 satisfaisant la condition r2 < 3 °C /min, et une troisième étape d'augmentation de température élevant la température à 2 800 à 3 000 °C à une vitesse de chauffage r3 satisfaisant la condition r3 < 3 °C/min, une étape de conservation de chaleur étant prévue entre les trois étapes d'augmentation de température.

9. Procédé selon la revendication 8, la source de carbone concassée étant traitée avec HF et HCl pendant le processus de purification, le rapport molaire de HF à HCl étant de 1 : (2 à 3,5).

10. Anode de batterie lithium-ion comprenant le matériau d'anode de batterie lithium-ion selon l'une quelconque des revendications 1 à 7, l'anode comprenant de préférence en outre un liant, le rapport en poids du matériau d'anode au liant étant de 1 : (0,04 à 0,09), et l'anode comprenant de préférence en outre un agent conducteur, le rapport en poids du matériau d'anode à l'agent conducteur étant de 1 : (0,01 à 0,1).

11. Batterie lithium-ion comprenant l'anode de batterie lithium-ion selon la revendication 10, une cathode et un électrolyte, la cathode et l'anode étant séparées par un séparateur, et la cathode, l'anode et le séparateur étant immergés dans l'électrolyte.

12. Bloc-batterie comprenant une ou plusieurs batteries lithium-ion selon la revendication 11 connectées en série et / ou en parallèle.

13. Véhicule alimenté par batterie comprenant le bloc-batterie selon la revendication 12.
